# EUROPEAN PATENT APPLICATION

(11) **EP 1 352 788 A2**
(43) Date of publication of application: **15.10.2003**
(21) Application number: 03075861.9
(22) Date of filing: 25.03.2003
(51) Int. Cl.: B60R 16/02

(54) **Transmitting digital information using radio receivers**

(30) Priority: 12.04.2002 US 121995
(71) Applicant: Delphi Technologies, Inc., Troy, MI 48007 (US)
(72) Inventor: Hjelmeland, Robert W., Kempton, IN 46049 (US); Moody, Peter A., Fishers, IN 46038 (US)
(74) Representative: Denton, Michael John

(57) **Abstract**

The invention includes a receiver used to transmit "targeted" information in an electronic format to one or more recipients. Some embodiments of the invention use a digital receiver such as a Satellite Digital Audio Receivers ("SDAR"), other digital receivers, and even analog receivers to reprogram electronic components in a vehicle from a remote location. Such an embodiment can be used to upgrade the performance characteristics of the vehicle. Entire fleets of vehicles can be reprogrammed at one time. Transmissions can target an individual vehicle, all vehicles of a particular model, or even multiple product lines of vehicles using a particular component. The digital receiver can also be used to communicate vehicle maintenance information, commercials and other forms of marketing, entertainment, and any other type of targeted communication. The digital receiver can also be incorporated into non-moving devices such as industrial machines, computer networks, office buildings, and even homes.

## Description

### Technical Field

The present invention relates generally to the use of audio receivers to receive electronic information sent from a remote location. More specifically, the present invention relates to transmitting "targeted" electronic information (such as a software upgrade for a particular vehicle component) to vehicles with audio receivers, such as satellite digital audio receivers ("SDARS") or other forms of digital and analog receivers.

### Background of the Invention

Modern vehicles are increasingly reliant on electronic components. Much of the functionality of such electronic components is dependent on properly functioning software. A software "bug" or defect can require the replacement or reprogramming of the component in all vehicle models/types and product lines that utilize that particular component. Reprogramming of such components often requires removal of the component from the vehicle. Thus, software "bugs" can require the expenditure of considerable time and money to correct. Moreover, it is often inconvenient for the owner or driver of a vehicle to take the time to bring his or her vehicle in for this type of repair. Thus, it is desirable for such "bugs" to be fixed in a more comprehensive, timely, and cost effective manner. It is advantageous for software fixes to be sent electronically to vehicles wherever the vehicles happen to be located. It is also desirable for the appropriate vehicles to receive the software fixes though a pre-existing device with other beneficial uses, such as an analog radio receiver.

The inability of the existing art to provide a means for targeted electronic communications with a vehicle is a detriment to the vehicle owner/driver (the "consumer"), and to others. The existing art does not provide a convenient way for the consumer to upgrade performance characteristics in a customized and flexible manner. It is desirable for a vehicle to be able to receive electronic information specifically relating to that particular vehicle, as well as electronic information relating to larger groups of vehicles. The existing art does not provide a mechanism for transmitting targeted vehicle maintenance reminders, marketing and advertising, entertainment, navigational information, or any other type of potentially useful targeted information.

### Summary of the Invention

This invention relates generally to the use of audio receivers to receive electronic information sent from a remote location. The receiver can receive "targeted" information in an electronic format sent from a remote transmitter because the bandwidth of the transmission can include a voluminous number of "channels" or "stations" and with particular receivers being configured to focus on particular "channels" or "stations." The recipient device can also be targeted using a unique Electronic Serial Number ("ESN"). The receiver can be used to: reprogram software; provide targeted product information such as vehicle maintenance reminders; customize marketing and advertising communications; facilitate access to navigational information; or otherwise support the ability to customize and target the communication of information.

The receiver can accommodate a technical infrastructure that already exists in the art. The receiver can support adding, upgrading, or reprogramming software for entire fleets of vehicles in a simultaneous or substantially simultaneous manner. The receiver can be incorporated into a traditional analog receiver architecture. Drivers and owners of vehicles can be sent vehicle maintenance reminders and other information pertaining to the specific vehicle, or to a larger group of vehicles to which the specific vehicle belong. Commercials and other advertising can be targeted to an individual or group of individuals to whom the particular vehicle is associated with. Customized entertainment options can also be provided using such a receiver.

The receiver can be incorporated in a wide variety of different vehicles. Cars, trucks, planes, boats, motorcycles, mopeds, bikes, forklifts, or any other vehicle using electronic components can potentially incorporate the receiver. The receiver can be used in non-vehicle environments as well, such as in other types of machinery, industrial equipment, office buildings, restaurant, retail outlets, and even homes.

### Brief Description of the Drawings

The present invention will now be described, by way of example, with reference to the accompanying drawings, in which:
Figure 1 is a high-level flow chart illustrating how a single source device can be used to transmit electronic information to multiple different recipient devices that incorporate an audio receiver.
Figure 2 is a component diagram disclosing one example of an audio receiver that is compatible with one common SDARS format.
Figure 3 is a component diagram disclosing an example of an audio receiver that is compatible with a different common SDARS format.
Figure 4 is a flow chart disclosing an example of how a digital receiver can be used to reprogram software for one or more vehicles.

### Description of the Preferred Embodiment

### A. High-level environmental view of the system

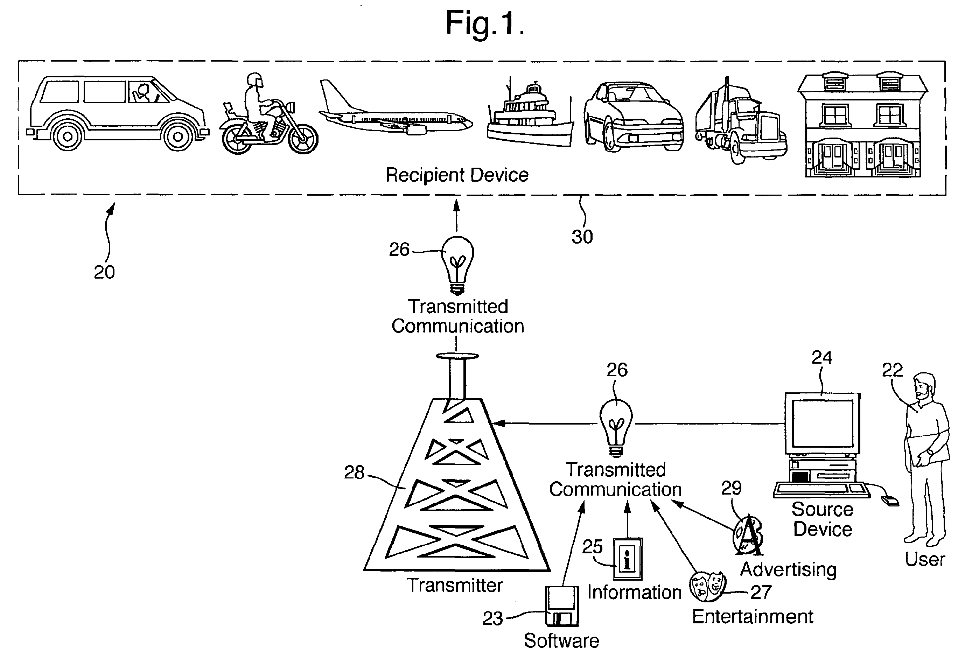

Referring now to the drawings, Figure 1 is a high-level flow chart disclosing some elements that can be incorporated in the invention. Figure 1 discloses a system 20 for transmitting information from a source device 24 to a recipient device 30. A user 22 can use a source device 24 to create a communication 26 to be sent to a transmitter 28 where the communication 26 can then be sent to one or more recipient devices 30. In a preferred embodiment, the transmitter 28 is a device used to transmit digital signals via satellite. In alternative embodiments, virtually any type of electromagnetic transmission device could be used, including AM radio, FM radio, CB radio, short wave radio, or any other type of analog or digital transmission.

The system 20 can function with a wide variety of different recipient devices 30. In some embodiments, recipient devices 30 can include vehicles, such as cars, trucks, motorcycles, airplanes, trains, boats, buses, mopeds, forklifts, bicycles, skateboards, roller blades, or any other device capable of receiving radio signals and incorporating an audio. Other embodiments can incorporate non-vehicle recipient devices 30, such as industrial equipment, machines, and even environments such as offices and homes; essentially any apparatus or location capable of receiving transmissions and incorporating the receiver.

The system 20 can incorporate a wide variety of different types of data and information in the form of a transmitted communication 26. In one embodiment, the transmitted communication is computer software 23 for the recipient device 30 or vehicle. The computer software can be fix an existing "bug," a software upgrade with additional new features, or install new software to perform new functions for the recipient device 30 or vehicle.

The transmitted communication 26 can include entertainment options related to the recipient device 30. For example, in an embodiment where the recipient device 30 is a vehicle, the entertainment option could be a "pay-per-view" radio event, or some other form of entertainment 27 that can be communicated via analog radio, digital radio, or satellite digital radio (collectively "radio").

The transmitted communication 26 can include information related to the recipient device 30. For example, in an embodiment where the recipient device 30 is a vehicle, information 25 relating to the vehicle can be transmitted by the system 20. Reminders to get an oil change, tune up, or other vehicle maintenance can be transmitted to the vehicle. The transmitted communication 26 can also include information related to navigation and traffic that is specific to the particular vehicle. The transmitted communication 26 can also relate to advertising or marketing information 29. For example, in an embodiment where the recipient device is a vehicle, the drivers of different types of vehicles can receive targeted commercials relating to the type of vehicle being driven. A driver of a sport utility vehicle can receive an advertisement relating to sport utility vehicles or a commercial relating to camping while a driver of a luxury sedan can receive an advertisement relating to the luxury sedan or season tickets for an opera. Consumers and businesses can both benefit from marketing communications that are increasingly "targeted" in nature.

The system 20 facilitates targeted communications 26 to vehicles and other recipient devices 30. The transmitter 28 can send communications 26 using many different communications in a substantially simultaneous or instantaneous manner. The receivers incorporated into or connected with the various receiving devices 30 serve to filter out the communications 30 that are not targeted to the particular recipient device 30. Some communications 30 can be targeted to a single individual recipient device 30. Other communications 30 can be targeted to a group of recipient devices 30. The recipient devices 30 selected for inclusion in a particular group of recipient devices 30 can be selected on the basis of a characteristic of the transmitted communication 26. For example, a communication 26 consisting of a software upgrade for multiple product lines of vehicles using a particular component, the relevant characteristic can be use of the particular component, and all vehicles with that characteristic can receive the software upgrade.

Some embodiments of the invention relate to non-vehicles. There are potentially many different desired uses for the ability to send transmitted communication 26 to devices 30 connected to or incorporating radio receivers. Homes can employ the system 20 to receive public service updates targeted to small geographic areas that include the particular home with the receiver. Similarly, office buildings could use the system 20 for the distribution of targeted communications.

The transmitter 28 can send multiple messages out to various recipient devices 30 in an instantaneous or substantially instantaneous manner (collectively "substantially instantaneous). The transmitter 28 can send transmitted communications 26 using technologies such as radio, digital radio, or satellite radio (collectively "radio").

The source device 24 can be any type of computer or other device capable of creating software, radio programming, or other forms of digital information. A user 22 can be any individual capable of operating the source device 24 in a competent manner. The user 22 can be an employee of an manufacturer or seller of the recipient device 30, an employee of a broadcasting company, or can be affiliated with any other entity or organization that can make use of the system 20 as a communications tool.

### B. Two potential receiver configurations

In order for a particular recipient device 30 to participate in the system 20, the recipient device 30 must have a receiver. In some embodiments, the receiver is a satellite digital audio receiver ("SDAR"). In alternative embodiments, the receiver can be a non-satellite digital receiver, or even an analog receiver. The system 20 can incorporate the use of SDARs, digital receivers, and analog receivers (collective "audio receivers" or simply "receivers").

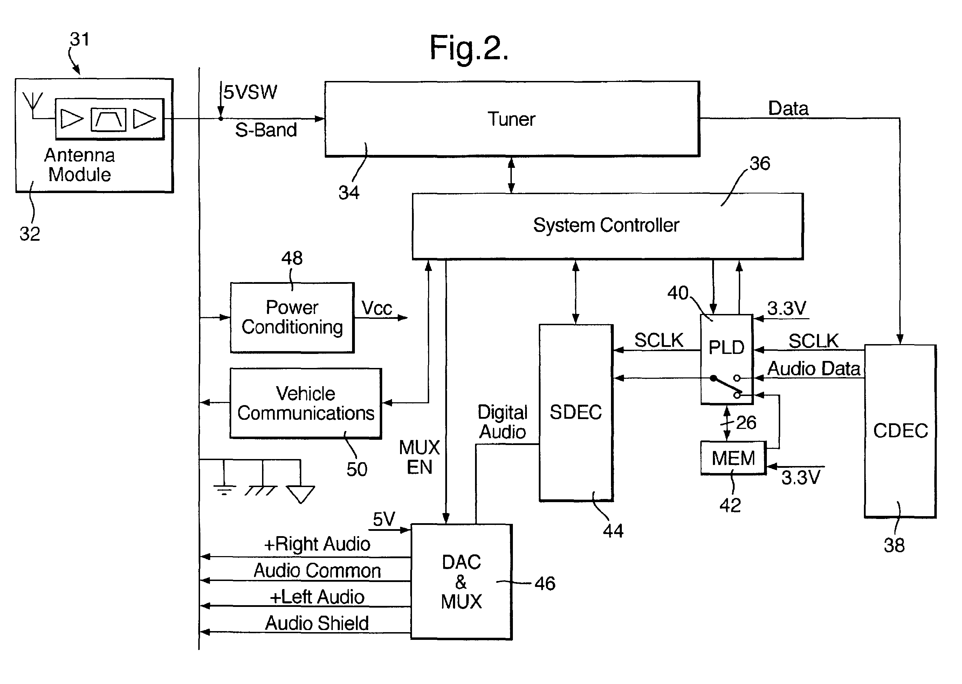

Figure 2 is a component diagram disclosing one example of a potential audio receiver 31 that can be used by the system 20. An antenna module 32 receives the transmitted communication 26 from an antenna attached to the recipient device 30. The system 20 can receive the transmission 26 in an analog format. The analog transmission 26 is then sent to a tuner 34. The tuner 34 converts the analog radio frequency ("RF") into a digital format where the transmission 26 is converted into a stream of 1's and 0's. The tuner 34 also serves to focus on a certain range of frequencies. Frequencies outside that range are filtered out and do not proceed further than the tuner 34.

The transmitted communication 26 can then be sent in a digital format to a digital decoder ("CDEC") 38. The digital decoder 38 is the part of the receiver 31 that selects the particular channels that the recipient device 30 is interested in. Transmissions 26 not intended for a particular recipient device 30 can be prevented from further processing in the receiver 31, as discussed in greater detail below. If a transmission 26 is targeted by a user 22 for a particular subset of recipient devices 30, that information can be incorporated into the transmission 26, and parsed out by the CDEC 38 so that only the intended recipient devices 30 perform subsequent processing on the basis the transmitted communication or data 26. The "targeting" of transmissions 26 is described in greater detail below.

If the transmitted communication 26 contains data intended for the particular recipient device 30, then the relevant data 26 can be sent to a programmable logic device (PLD) 40. The PLD 40 is a programmable integrated circuit. The PLD 40 can store the transmitted data 26 in a memory 42 instead of forwarding on the transmitted communication 26. If the recipient device 30 is a vehicle that is currently in operation, it may not be desirable for the recipient device 30 to immediately invoke processing based on the transmitted data 26. For example, it may not be desirable or safe for a software upgrade or bug fix for the vehicle's braking system to be downloaded into the system 20 while the vehicle 30 is in operation. In other circumstances, the transmitted data 26 may be a commercial targeted specifically to the driver of the vehicle 30, in which case that data 26 should immediately invoke subsequent processing by the system 20. In such an circumstance, the memory chip 42 would not be used to store the transmission 26.

A source decoder ("SDEC") 44 can be used to de-encrypt the transmitted data 26. The portion of the transmission 26 relating to standard radio use can then be sent to the digital to analog converter ("DAC") and multiplexer ("MUX") 46. The DAC can convert the digital signals back into analog signals. This allows a radio with analog speakers to play the transmission 36. The multiplexer component can be used to send one of several inputs over a single output channel, allowing the occupants of the vehicle to listen to their radio using standard analog speakers while the receiver 31 is simultaneously processing a digitally transmitted communication 26.

The part of the transmission 26 that does not relate to the customary radio signal can be sent to a controller 36. In an embodiment where the transmission 26 contains computer software 23, the computer software 23 can be sent to a vehicle communications module 50 by the controller 36. The communications module 50 in the receiver 31 can connect to a communications bus for the vehicle, to facilitate the delivery of the software as desired. Any number of computers or related programmable devices can be connected to the communications bus for the vehicle. Other forms of transmitted communication 26 may also utilize the communications module 50 depending on the nature of the communication.

A power conditioning module 48 can be used to provide power for the receiver 31, and potentially any other devices connected to the communications module 50.

The specific receiver 31 in Figure 2 is configured to function with the satellite digital radio broadcasts provided by a company such as by XM Satellite Radio Inc., a company with broadcast facilities and corporate offices in Washington, D.C. Those skilled in the art know how to convert the receiver 31 in Figure 2 for alternative transmitters 28 and receivers 31 used by the system 20.

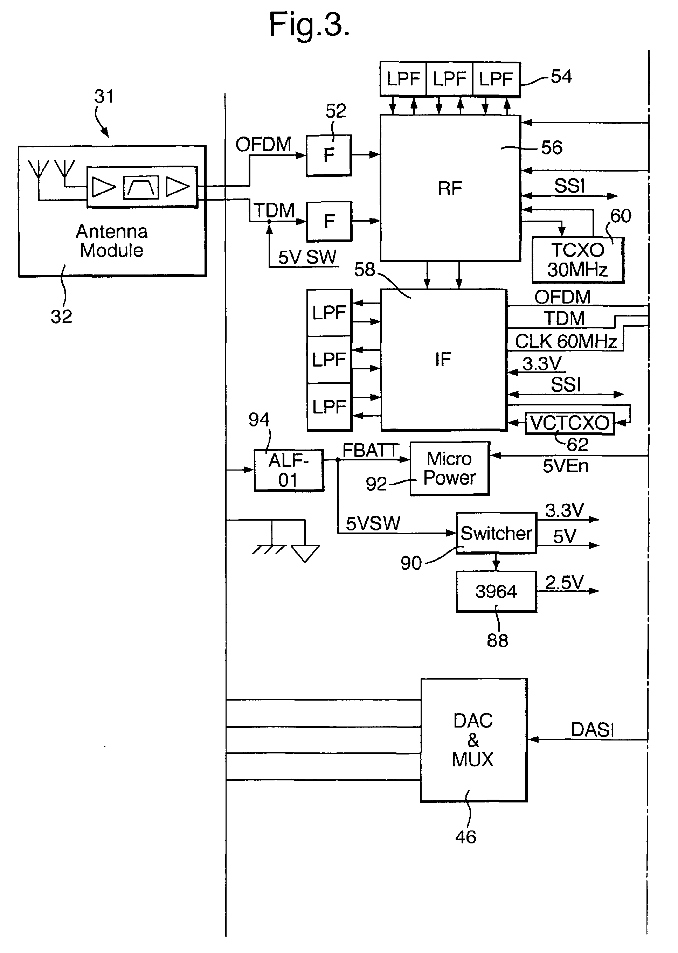

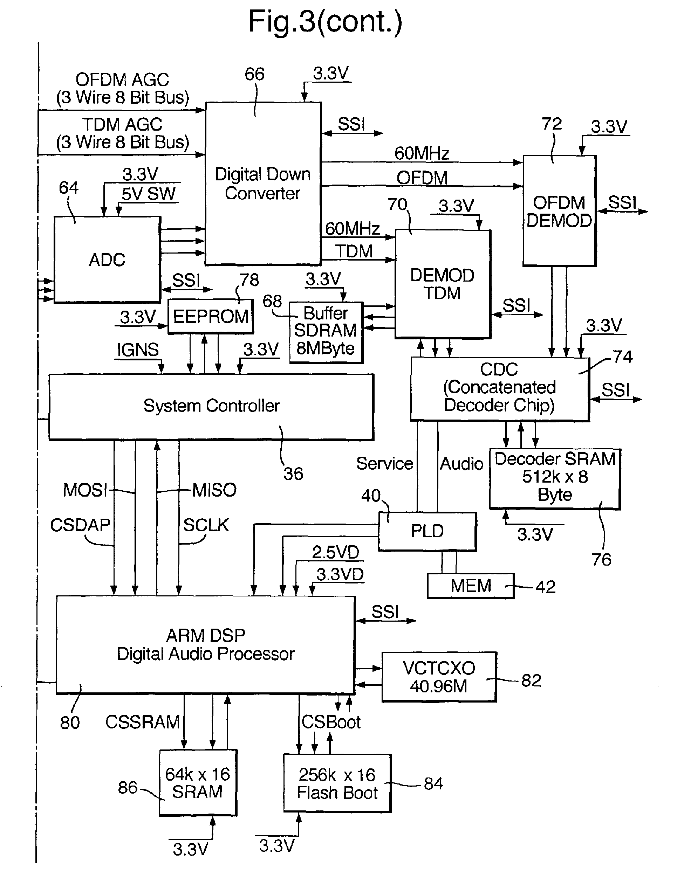

Figure 3 is a component diagram providing a second example of a receiver 31 used by the system 20. The receiver 31 can receive the transmitted communication 26 using the antenna module 32 connected to an antenna that can be attached to the outside of the recipient device 30.

As discussed above, the transmitted communication 26 can include in a simultaneous manner the transmission of many different frequencies. Only some of those frequencies are passed through the receiver 31. Filters ("F") 52 and low-pass filters ("LPF") 54 are used to limit the frequencies that the system 30 pays attention to. These components are typically part of the tuner 34. Similarly, a radio frequency ("RF") 56 and an intermittent frequency ("IF") 58 are both sub-components of the tuner 34. In a preferred embodiment of system 20, only certain frequencies are used to transmit certain types of information. Moreover, different systems 20 should utilize different frequency ranges to avoid overlap. The Federal Communications Commission ("FCC") is ultimately responsible for spectrum management under existing laws.

A temperature compensated crystal oscillator ("TCXO") 60 can be used to keep the frequency constant by compensating for changes in temperature in the RF 56. A voltage controlled temperature compensated crystal oscillator ("VCTXCO") 62 can be used to keep the frequency constant by compensating for changes in temperature in the IF 58. Alternative embodiments can employ different TCXO 60, VCTXCO 62, or related components.

An analog to digital converter ("ADC") 64 is used to convert analog signals into digital signals of 1's and 0's. The transmitted communication 26 is generally created in a binary format using the source device 24. A digital down converter 66 is used by the system 20 to open the "electronic envelope" containing the transmitted communication 26. The envelope can include information relating to the desired targeted recipients of the communication 26, or provide other useful information relating to the source and/or purpose of the communication 26. The receiver 31 can be configured to disregard a transmission on the basis of information in the electronic envelope.

An orthogonal frequency division multiplexing demodulator ("OFDM DEMOD") 72 can "unravel" or "decode" transmitted communications 26 that consist of multiple interweaving frequencies. Similarly, a time-division multiplexing demodulator ("DEMOD TDM") 70 is a component for unraveling or decoding communications "packed" using time-division techniques. The DEMOD TDM 70 can be supported with a buffer of synchronous dynamic random access memory ("SDRAM") 68. The system 20 can thus preferably received OFDM-modulated streams and TDM-modulated streams in a simultaneous manner. Alternative embodiments may incorporate different forms or combinations of modulation. After the broadcast signals are demodulated, a concatenated decoder chip ("CDC") 74 handles decryption, error correction and channel selection. The CDC 74 can be supported by a static random access memory decoder ("SRAM decoder") 76.

The programmable logic device 40 serves as a switch for controlling transmission of the communication 26 to a digital audio processor 80. If for example, the transmitted communication 26 is for the replacement of a mission critical function on a vehicle, and the vehicle is currently in operation or it is otherwise not desirable to immediately incorporate the transmitted information 26, the communication can be placed into memory 42 until it is an appropriate time to incorporate the results of the transmission 26.

The digital audio processor 80 decodes the compressed transmission and expands it. The digit audio processor 80 can be supported with a static random access memory ("SRAM") chip 86 and a flash boot chip 84. In a preferred embodiment of the invention, "flashable" electronics are used for reprogrammable media. Such electronics can be supported with a conventional "memory stick." "Flashable" electronics can be reprogrammed at a fast rate, changing multiple bits at the same time.

The radio signal received by the receiver 31 includes two categories of information. The first category includes the transmitted communication 26 that was created using a source device 24. The second category includes the radio communication in which the transmitted communication is embedded. Use of the system 20 to send and receive targeted communications 26 does not preclude the use of the otherwise "ordinary" radio functions. The DAC and MUX 46 covert the digital radio signal back into an analog format, and sends the various analog inputs to the analog speakers so that the occupants in the vehicle can continue to use the radio unimpeded by the system 20. This functionality allows the receiver 31 to function as an ordinary analog receiver. The receiver 31 in the system 30 is inexpensive because its components and design are as close to a typical analog audio receiver as possible.

The part of the radio signal representing the transmitted communication 26 is then sent to the system controller 36 which can be supported with an electrically erasable programmable read-only memory ("EEPROM") chip 78. The "3964" interface 88 is a standard in the auto industry. A switcher 90 provides the ability to either forward on the transmitted communication 26 to the "3964" interface 88, which is an important component in the vehicle communications module 50. The communications module 50 can be connected to any number of computers or related programmable devices on the vehicle. An ALF-01 94 and micro-power 92 battery provide the power required for the receiver 31 and the communications module 50.

The specific receiver 31 in Figure 3 is configured to function with the satellite digital radio broadcasts provided by a company such as Sirius Satellite Radio, Inc., with offices in New York City, New York. Those skilled in the art know how to convert the receiver 31 in Figure 3 for alternative transmitters 28 and receivers 31 used by the system 20.

### C. "Targeting" communications

The system 20 can target communications using two broad non-exclusive categories of processing. One method can be described as the bottom-up method. This method consists of selecting the targeted recipients on an individual recipient device 30 by individual recipient device 30 basis. For example, each vehicle already possesses a unique vehicle identification number ("VIN"). Each vehicle participating in the system 20 as a recipient device 30 can incorporate a similar unique electronic signature number ("ESN"). The ESN can relate to the VIN, or the ESN can be a number created by a digital satellite radio broadcaster for the vehicle. In either case, the ESN can be physically incorporated into the receiver 31 or some other electronics component of the vehicle. Using a bottom-up targeting methodology means that each individual recipient or receiving device 30 must be specifically placed on a distribution list. A database can be used with all of the ESN numbers on the system 20. The database can also store information relating to characteristics of the vehicle, such as manufacturer, model, various component characteristics, and any other relevant vehicle characteristics. In such an embodiment, the system 20 can select all of the ESN numbers with the targeted characteristic, and send the communications to all vehicles with the selected ESN numbers. This can be the preferred way to target individual vehicles or groups of vehicles. However, for extremely large distribution lists, a top-down methodology may be preferred in some circumstances.

In a top-down method, certain attributes of the vehicle or recipient device 30 are recorded into the receiver 31 or other electronic device in the vehicle itself. Thus, the receiver 31 or vehicle may "know" the manufacturer of the car, the model, the model year, the identity of certain components, or other characteristics relating to the vehicle or recipient device 30. These characteristics can potentially even be incorporated into the filtering process performed by the digital down converter 66, tuner 34, CDEC 38, DEMOD 72, or some other "filtering" type component in the receiver 31.

The ability to send targeted transmissions 26 is not limited to recipient devices 30 that are vehicles. The system 30 can provide valuable functionality to retail stores, restaurants, office buildings that are targeted to the characteristics relating to the particular recipient device 30.

### D. Software as the transmitted communication

As described above, the transmitted communication 26 can be virtually any form of data that is capable of being stored in a digital format of 1's and 0's. When the transmitted communication takes the form of vehicle maintenance information 25, entertainment 27, or advertising 29, persons in the vehicle can receive the benefit of the data or information, but the performance of the vehicle itself is not changed. In contrast, the transmitted communication 26 of software 23 can change, remedy, or even enhance the performance of the vehicle. Thus, the system 20 can be a powerful tool for fixing software bugs without having to physically replace components due to software problems. The system 20 can also be used to download software to ancillary devices used in a vehicle. For example, devices used by rental car companies and taxi cab fleets to manage their fleets could be incorporated into the system 20. The potential to save time and money can make the system 20 desirable to automotive companies, taxi fleets, rental car fleets, airplane manufacturers, airlines, and virtually any organization or individual interested in a way of transmitting information via radio.

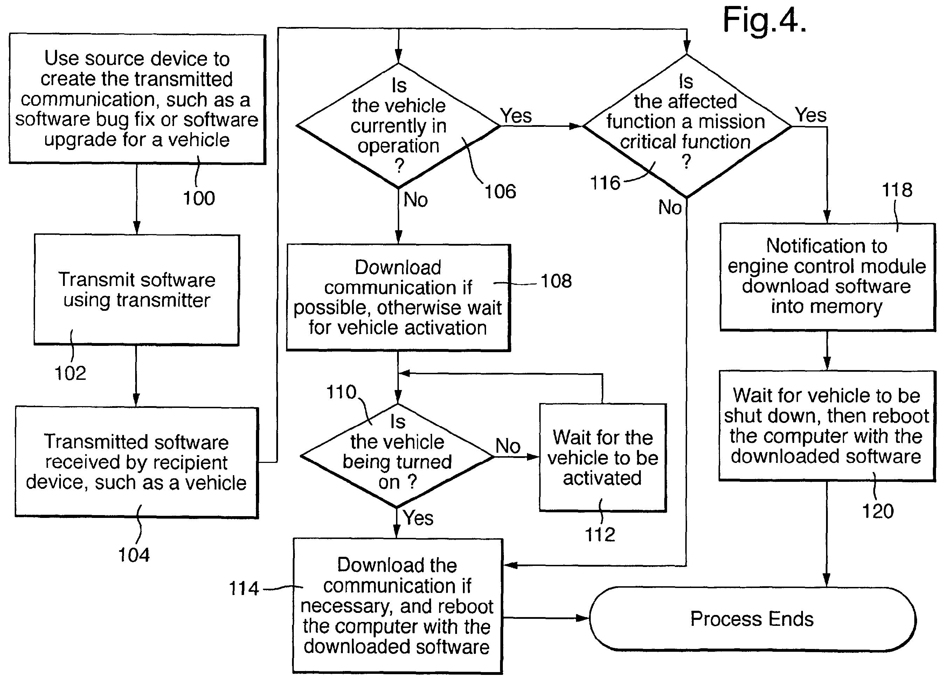

Figure 4 is a flow chart of the processing involved in changing, adding, or deleting the software 23 in a vehicle or an ancillary device connected to the vehicle. Step 100 requires that the transmitted communication 26 must first be created before it can be transmitted. A computer programmer can use a source device 24 to create the software 23. The system 20 can use several different ways to target the software 23 to its intended recipients. One such method is for the software itself to contain information relating to which vehicles are to receive the transmission. As such a targeting method will cause potentially many different vehicles to needlessly download software 23 that is not intended for the particular vehicle, it is not preferred that the system 20 rely on the software 23 itself to target the transmitted communication 26 to the desired recipient devices 30, or vehicles.

The software 23 can then be transmitted to a vehicle or group of vehicles using a radio transmitter 28 at step 102. The radio transmitter is preferably a digital satellite radio transmitter 26, but non-satellite digital transmitters 26 and analog radio transmitters 26 can also be used. Non-satellite transmitters 26 suffer from geographic limitations, but such limitations may not be important when dealing with a fleet of vehicles in a particular location, such as city cab company.

The transmitted software 23 can then be received by the vehicle at step 104. The process by which the vehicle incorporates the new software 23 depends on the status of the vehicle and the functions of the vehicle affected by the new software. At step 106, the operational status of the vehicle is determined. Even vehicles that have been turned off or deactivated (such as a car in park with the ignition key out and the engine off) are still active for a period of time as the electronics shut down. A recently turned off vehicle can constitute an active operational vehicle for the purposes of step 106.

If the vehicle is not active, the software is downloaded at step 108 if possible. If it is not possible to download the software due to the nature of the vehicle electronics, step 108 requires that the system 20 wait for vehicle activation. The system 20 then periodically checks at step 110 whether or not the vehicle is being activated. If the system 20 is not being activated, then the system 20 continues to wait for vehicle activation at step 112. Upon activation at step 114, the software 23 is downloaded if it was not possible to do so at 108. Regardless of whether the software 23 is downloaded at step 108 or step 114, step 114 includes the rebooting of the computer with the downloaded software 23.

If the vehicle is active, special care needs to be taken not to disrupt a mission-critical function of the vehicle. It may not desirable to disrupt braking systems, engine controls, and other functions of the vehicle while the vehicle is operating. In some embodiments of the invention, shut down or impairment of the vehicle may be the object of the system 20, such as a system 20 for eliminating car chases by providing law enforcement with the ability to disable vehicles being pursued. In embodiments where the transmitted communication 26 is not software 23, there are no mission critical functions because the transmitted communication 26 does not change the performance of the vehicle.

If at step 116 the software 23 does not serve or otherwise impair a mission critical function, then at step 114 the software 23 is downloaded and the onboard computer is rebooted with the new software 23. If the software does serve a mission critical function at step 116, a notification can be sent to the engine module at step 118 and the software can be stored in memory 42 without rebooting the computer. The system 20 can then wait at step 120 for the vehicle to shut down so that the computer can safely rebooted with the downloaded software 23. After the onboard computer has rebooted with the new software, the process ends.

In alternative embodiments where the recipient device 30 is not a vehicle, the ability to transmit software 23 using a radio transmitted 28 and a radio receiver 31 can also prove beneficial, especially in the ability to coordinate and target such transmissions. For example, a company with retail stores in numerous different locations could use the system 20 to transmit software 23 or other information to its different locations. Radio transmissions of software are not subject to high traffic levels on the Internet, or other obstacles that can prevent the transmission of software using other means.

It should be understood that various alternatives to the embodiments of the invention described herein may be employed in practicing the invention. It is intended that the following claims define the scope of the invention and that the method and apparatus within the scope of these claims and their equivalents be covered thereby.

## Claims

1. An improved method for installing software in a vehicle, the improvement comprising:
transmitting the software (23) using a radio transmitter (28);
capturing the software (23) with a radio receiver (31) on the vehicle; and
installing the software (23) into a computer on the remote vehicle.

2. The method of transmitting software as in claim 1, wherein the receiver (31) is a digital receiver.

3. The method of transmitting software as in claim 2, wherein the digital receiver is a satellite digital audio receiver.

4. The method of transmitting software as in claim 1, wherein the software (23) is transmitted to more than one vehicle in a substantially simultaneous manner.

5. The method of transmitting software as in claim 4, wherein the software (23) is not downloaded to the computer while the vehicle is in an active state.

6. The method of transmitting software as in claim 1, wherein the software (23) is transmitted to a group of vehicles sharing a characteristic relevant to the software (23).

7. The method of transmitting software as in claim 5, wherein only a subset of the vehicles receiving the transmission download the software (23).

8. The method of transmitting software as in claim 1, wherein a vehicle waits to download the software (23) until the next time the vehicle is activated.

9. The method of transmitting software as in claim 1, wherein the software (23) provides new functionality to the vehicle.

10. The method of transmitting software as in claim 1, wherein the computer is connected to a communications bus on the vehicle.

11. The method of transmitting software as in claim 1,wherein the computer in the vehicle is connected to electronic components in the vehicle, and the electronic components are flashable.

12. An improved method for transmitting digital information from a source device (24) to a remote recipient device (30) using radio waves, comprising the steps of:
creating the information (25) in an electronic format on a source device (24);
transmitting the information to a digital receiver (31) connected to the recipient device (30);
inputting the transmitted information (26) to a computer in the recipient device (30); and
invoking certain processing by the recipient device (30) as a result of the transmitted information (26).

13. The method for transmitting information as in claim 12, wherein the recipient device (30) is a vehicle.

14. The method for transmitting information as in claim 13, wherein the processing performed by the vehicle relates to vehicle maintenance.

15. The method for transmitting information as in claim 12, wherein the recipient device (30) is industrial equipment.

16. The method for transmitting information as in claim 12, wherein the same information (25) is sent to a plurality of recipient devices (30) in a substantially simultaneous manner.

17. The method for transmitting information as in claim 16, wherein each of the recipient devices (30) receiving the same information (25) share a characteristic relevant to the information (26) received.

18. The method for transmitting information as in claim 12, wherein the processing performed by the recipient device (30) is the communication of a marketing message (29) targeted to particular recipient device (30).

19. The method of transmitting information as in claim 12, wherein the processing performed by the recipient device (30) is the delivery of entertainment (27).

20. An improved system (20) for delivering software (23) to a remote vehicle, the improvement comprising:
computer software (23) transmitted to the vehicle via radio waves;
an audio receiver (31) to received said transmitted software (23); and
a communications bus for providing access to said software (23) to a computer on the vehicle.

21. A system for delivering software to a remote vehicle as in claim 20, further comprising a plurality of said vehicles, said computer software (23) being transmitted to said plurality of said vehicles.

22. A system for delivering software to a remote vehicle as in claim 20, further comprising a plurality of said vehicles and a subset of said plurality of vehicles, said software (23) being transmitted to said subset of said vehicles.

23. A system for remotely delivery software to a remote vehicle as in claim 22, wherein said subset of vehicles is selectively identified from said plurality of said vehicles on the basis of a shared vehicle characteristic.

24. A improved system (20) for delivering information (25) in an electronic format to a remote recipient device (30), the improvement comprising:
a transmitter (28) for transmitting the information (25) using radio waves;
a satellite digital audio receiver (31) for receiving the electronic information (25) from the transmitter (28);
a recipient device (30) including said digital audio receiver (31); and
a resulting process occurring in said recipient device (30);
wherein said information (25) causes recipient device (30) to invoke said resulting process, and wherein said recipient device (30) is connected to said satellite digital audio receiver (31).

25. The system (20) for delivering information as recited in claim 24:
further comprising a plurality of said recipient devices (30) and a plurality of said satellite digital receivers (31);
wherein the electronic information (25) can be transmitted to a plurality of said satellite digital receivers (31) in a substantially simultaneous manner; and
wherein each said recipient device (30) in said plurality of recipient devices (30) has at least one satellite digital receiver (31).

26. The system (20) for delivering information as recited in claim 24:
further comprising a subset of said plurality of recipient devices (30), a subset of said plurality of said satellite digital receivers (31), and a recipient device characteristic;
wherein said subset of satellite digital receivers (31) ignore the information because said subset of satellite digital receivers (31) are connected to said subset of recipient devices (30), and said recipient devices (30) do not posses said recipient device characteristic.

27. The system (20) for delivering information as in claim 24, said satellite digital receiver (31) further including:
a tuner (34);
a digital decoder (38);
a source decoder (44).

28. The system (20) for delivering information as in claim 20, said satellite digital receiver (31) further including:
a digital down converter (66);
a plurality of demodulators;
a concatenated decoder chip (74);
an analog to digital converter (46); and
a 3964 interface (88).
